# EUROPEAN PATENT APPLICATION

(11) **EP 4 489 105 A1**
(43) Date of publication of application: **08.01.2025**
(21) Application number: 23829670.1
(22) Date of filing: 26.04.2023
(51) Int. Cl.: H01M 4/133, H01M 4/62, H01M 4/587

(54) **NEGATIVE ELECTRODE SHEET, ELECTROCHEMICAL APPARATUS AND ELECTRONIC DEVICE**

(30) Priority: 30.06.2022 CN 202210754825
(71) Applicant: Ningde Amperex Technology Limited, Ningde, Fujian 352100 (CN)
(72) Inventor: YI, Zheng, Ningde, Fujian 352100 (CN); ZHENG, Zigui, Ningde, Fujian 352100 (CN); XIE, Yuansen, Ningde, Fujian 352100 (CN)
(74) Representative: Icosa
(86) International application number: PCT/CN2023/090994
(87) International publication number: WO 2024/001483

(57) **Abstract**

This application provides a negative electrode plate, an electrochemical device, and an electronic device. The negative electrode plate includes a negative current collector and a negative active material layer disposed on at least one side of the negative current collector. The negative active material layer includes a negative active material, the negative active material includes graphite and hard carbon, and a ratio of a mass percent ω_{H} of hydrogen to a mass percent ω_{C} of carbon in the hard carbon is 0.02 ≤ ω_{H}/ω_{C} ≤ 0.2. The negative electrode plate according to this application can enhance the high-temperature cycle performance of the electrochemical device.

## Description

### CROSS-REFERENCE TO RELATED APPLICATIONS

This application claims priority to Chinese Patent Application No. 202210754825.7, filed on June 30, 2022 and entitled "NEGATIVE ELECTRODE PLATE, ELECTROCHEMICAL DEVICE, AND ELECTRONIC DEVICE", which is incorporated herein by reference in its entirety.

### TECHNICAL FIELD

This application relates to the technical field of electrochemistry, and in particular, to a negative electrode plate, an electrochemical device, and an electronic device.

### BACKGROUND

Lithium-ion batteries are widely used in the field of consumer electronics by virtue of many advantages such as high volumetric and gravimetric energy densities, environmental friendliness, a high operating voltage, a small size, a light weight, and a long cycle life. In recent years, with rapid development of electric vehicles and portable electronic devices, people are imposing higher requirements on the energy density, safety, cycle performance, and other performance of an electrochemical device, and are expecting the advent of a novel electrochemical device with overall performance enhanced comprehensively. Currently, an electrochemical device in the prior art usually generates heat when being charged or discharged at a high rate, and the resultant Joule heat increases rapidly with the increase of the charge rate and the discharge rate. Consequently, the temperature of the electrochemical device rises sharply, and the cycle performance of the electrochemical device declines, thereby shortening the service life of the electrochemical device.

### SUMMARY

An objective of this application is to provide a negative electrode plate, an electrochemical device, and an electronic device to enhance the high-temperature cycle performance and rate performance of the electrochemical device and reduce the temperature increment of the electrochemical device during charging.

A first aspect of this application provides a negative electrode plate, including: a negative current collector and a negative active material layer disposed on at least one side of the negative current collector. The negative active material layer includes a negative active material, the negative active material includes graphite and hard carbon, and a ratio of a mass percent ω_{H} of hydrogen to a mass percent ω_{C} of carbon in the hard carbon is 0.02 ≤ ω_{H}/ω_{C} ≤ 0.20. By controlling the ratio of the mass percent ω_{H} of hydrogen to the mass percent ω_{C} of carbon in the hard carbon to fall within the above appropriate range, and by adding graphite and the hard carbon into the negative active material, this application can alleviate the heat emission of the electrochemical device during high-rate charging and discharging and significantly reduce the temperature increment, thereby enhancing the high-temperature cycle performance of the electrochemical device and ensuring that the energy density and the first-cycle Coulombic efficiency of the electrochemical device are relatively high.

In any embodiment of this application, the ratio of the mass percent ω_{H} of hydrogen to the mass percent ω_{C} of carbon in the hard carbon is 0.08 ≤ ω_{H}/ω_{C} ≤ 0.15, thereby further reducing the temperature increment of the electrochemical device and improving the rate performance and high-temperature cycle performance of the electrochemical device.

In any embodiment of this application, the negative electrode plate includes graphite particles and hard carbon particles. D¹v₅₀ of the graphite particles is 7 µm to 14 µm; and/or D²v₅₀ of the hard carbon particles is 2 µm to 7 µm. In this way, the graphite particles and the hard carbon particles can be mixed more uniformly, and the particles can be arranged more compactly, thereby improving the energy density, high-temperature cycle performance, and rate performance of the electrochemical device.

In any embodiment of this application, the negative electrode plate includes graphite particles and hard carbon particles. D¹v₅₀ of the graphite particles and D²v₅₀ of the hard carbon particles satisfy: D²ᵥ₅₀/D¹v₅₀ < 0.8. When the above relation is satisfied, the graphite particles and the hard carbon particles can be mixed more uniformly, and the particles can be arranged more compactly, thereby ensuring the negative electrode to provide sufficient lithium storage sites, exerting the synergy between the hard carbon and the graphite, and further enhancing the energy density, high-temperature cycle performance, and rate performance of the electrochemical device.

In any embodiment of this application, D¹v₅₀ of the graphite particles and D²v₅₀ of the hard carbon particles satisfy: 0.1 ≤ D²v₅₀/D¹v₅₀ ≤ 0.7. When such a relation is satisfied, more synergy is exerted between the hard carbon and the graphite, and the electrochemical device is more excellent in the energy density, high-temperature cycle performance, and rate performance.

In any embodiment of this application, in an X-ray diffraction pattern of the negative active material, a first diffraction peak and a second diffraction peak appear in a range of a diffraction angle 20 from 20° to 30°. A full-width-at-half-maximum of the first diffraction peak is 3° to 10°, and a full-width-at-half-maximum of the second diffraction peak is less than 1°. A peak intensity ratio between the second diffraction peak and the first diffraction peak, denoted as I_{B}/I_{A}, is greater than 100. When the peak intensity I_{A} of the first diffraction peak and the peak intensity I_{B} of the second diffraction peak satisfy the above relation, it means that the mass percent of the hard carbon and the mass percent of the graphite satisfy the specified relation so that more synergy is exerted between the hard carbon and the graphite, thereby reducing the temperature increment of the electrochemical device during high-rate charging and discharging, and enhancing the rate performance and high-temperature cycle performance of the electrochemical device.

In any embodiment of this application, in a Raman spectrum of the negative active material layer, a first characteristic peak appears in a wavenumber range from 1320 cm⁻¹ to 1370 cm⁻¹, and a second characteristic peak appears in the wavenumber range from 1570 cm⁻¹ to 1620 cm⁻¹. An intensity ratio between the first characteristic peak and the second characteristic peak is I_{D}/I_{G}, and the I_{D}/I_{G} ratio is less than 0.3. In this case, more synergy is exerted between the hard carbon and the graphite, thereby reducing the temperature increment of the electrochemical device, and enhancing the rate performance and high-temperature cycle performance of the electrochemical device.

In any embodiment of this application, based on a mass of the negative active material, a mass percent of the hard carbon is 0.5% to 5%, and optionally 1% to 5%. When the mass percent of the hard carbon and the mass percent of the graphite satisfy the specified relation, more synergy is exerted between the hard carbon and the graphite, thereby reducing the temperature increment of the electrochemical device during high-rate charging and discharging, and enhancing the rate performance and high-temperature cycle performance of the electrochemical device.

In any embodiment of this application, Dv₅₀ of the negative active material is 3 µm to 15 µm, and/or Dv₉₉ of the negative active material is 10 µm to 45 µm. In this way, the particles of the negative active material can be mixed more uniformly, and the particles can be arranged more compactly, thereby improving the energy density, rate performance, and high-temperature cycle performance of the electrochemical device.

A second aspect of this application provides an electrochemical device, including the negative electrode plate according to the first aspect of this application.

A third aspect of this application provides an electronic device, including the electrochemical device according to the second aspect of this application.

The electronic device according to this application contains the electrochemical device according to this application, and therefore, achieves at least the same advantages as the electrochemical device.

By adding graphite and the hard carbon into the negative active material, and by controlling the ratio of the mass percent ω_{H} of hydrogen to the mass percent ω_{C} of carbon in the hard carbon to fall within the above appropriate range, this application can alleviate the heat emission of the electrochemical device during high-rate charging and discharging and significantly reduce the temperature increment, thereby enhancing the rate performance and high-temperature cycle performance of the electrochemical device.

### DETAILED DESCRIPTION

To make the objectives, technical solutions, and advantages of this application clearer, the following gives a clear and comprehensive description of the technical solutions of this application with reference to embodiments. Evidently, the described embodiments are merely a part of but not all of the embodiments of this application. The embodiments described herein are illustrative in nature, and are intended to enable a basic understanding of this application. No embodiment of this application is to be construed as a limitation on this application.

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by using a measurement method commonly used in the art (for example, may be tested according to the method described in an embodiment of this application).

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

Currently, with the development of high-power devices such as electric vehicles and electric tools, people are imposing higher requirements on the cycle performance of electrochemical devices under high-rate charging conditions, and typically the cycle performance of a lithium-ion battery. With the advantages of low polarization and a stable charge-and-discharge platform, Graphite is the most widely used negative electrode material in existing electrochemical devices. However, during the research, the applicant hereof finds that, due to anisotropy of graphite, the uniformity of current of the negative electrode plate containing graphite is inferior during charging, thereby resulting in lithium plating in local regions and poor kinetic performance. However, hard carbon is isotropic, and exhibits good current uniformity during charging and discharging, thereby alleviating lithium plating significantly. Therefore, the applicant discloses a negative electrode plate made of graphite and hard carbon and characterized by excellent high-temperature cycle performance.

### Negative electrode plate

A first aspect of this application provides a negative electrode plate, including: a negative current collector and a negative active material layer disposed on at least one side of the negative current collector. The negative active material layer includes a negative active material, the negative active material includes graphite and hard carbon, and a ratio of a mass percent ω_{H} of hydrogen to a mass percent ω_{C} of carbon in the hard carbon is 0.02 ≤ ω_{H}/ω_{C} ≤ 0.2.

The negative electrode plate according to this application includes both graphite and hard carbon. Due to the anisotropy of graphite, the uniformity of current of the electrode plate containing the graphite is inferior during charging, thereby being prone to cause lithium plating in local regions and low kinetic performance of the electrochemical device. However, after hard carbon added into the graphite, due to the isotropy of hard carbon, the uniformity of current of the electrode plate containing a mixture of the graphite and the hard carbon is good during charging and discharging, thereby alleviating the lithium plating and enhancing the kinetic performance of the electrochemical device.

Without intending to be bound by any theory, the applicant hereof finds during research that, in the hard carbon mixed with graphite, different mass ratios between hydrogen and carbon affect the performance of the electrochemical device to different degrees. The graphite blended with a small amount of hard carbon can significantly reduce the temperature increment of the electrochemical device cycled at a high rate. Therefore, by controlling the ratio of the mass percent ω_{H} of hydrogen to the mass percent ω_{C} of carbon in the hard carbon to fall within the above appropriate range, this application can alleviate the heat emission of the electrochemical device during high-rate charging and discharging and significantly reduce the temperature increment, thereby enhancing the high-temperature cycle performance of the electrochemical device and ensuring that the energy density and the first-cycle Coulombic efficiency of the electrochemical device are relatively high.

Further, the applicant also finds that the graphite blended with hard carbon can also improve the rate performance of the electrochemical device. This is related to the lithium storage mechanism of hard carbon. Different from the intercalation-based lithium storage mechanism of graphite, hard carbon stores lithium by adsorbing and pore-filling. Coupled with the isotropy of the hard carbon and improved current uniformity of the electrode plate containing the hard carbon, the graphite blended with hard carbon enhances the rate performance of the negative electrode and the entire electrochemical device.

In some embodiments, the ratio of the mass percent ω_{H} of hydrogen to the mass percent ω_{C} of carbon in the hard carbon is 0.08 ≤ ω_{H}/ω_{C} ≤ 0.15. For example, the ratio of the mass percent ω_{H} of hydrogen to the mass percent ω_{C} of carbon in the hard carbon is 0.09 ≤ ω_{H}/ω_{C} ≤ 0.14, 0.10 ≤ ω_{H}/ω_{C} ≤ 0.13, or 0.11 ≤ ω_{H}/ω_{C} ≤ 0.12.

By controlling the mass ratio between hydrogen and carbon in the hard carbon to fall within the above range, this application enhances the rate performance and high-temperature cycle performance of the electrochemical device. Without intending to be bound by any theory, the applicant hereof finds during research that, in a mixed system of graphite blended with the hard carbon, the potential range of the negative electrode during charging and discharging is provided solely by the high potential range of graphite. In this potential range, a lithium storage site formed by hydrogen in the hard carbon does not participate in a charge-and-discharge reaction. In other words, hydrogen does not undergo a bonding reaction with lithium to store lithium. However, due to the presence of hydrogen, although no lithium storage reaction occurs, the lithium storage site is speculated to be able to absorb the heat derived from the charge-and-discharge reaction process of the graphite, thereby reducing the temperature increment of the negative electrode during high-rate charging and discharging, and in turn, enhancing the high-temperature cycle performance of the electrochemical device. Moreover, when the mass percent of hydrogen in the hard carbon is higher, more lithium storage sites are provided by hydrogen, and therefore, the high-temperature cycle performance of the electrochemical device is improved more noticeably. However, when the mass percent of hydrogen is excessive, the amount of defects in the hard carbon is also larger. The large amount of defects leads to a large content of irreversible lithium absorbed by the negative electrode during the first-cycle charge, thereby resulting in a decline in the first-cycle Coulombic efficiency and the energy density. Therefore, by controlling the mass ratio between hydrogen and carbon in the hard carbon to fall within the above appropriate range, synergy is exerted between the hard carbon and the graphite to enhance the rate performance and high-temperature cycle performance of the electrochemical device.

In some embodiments, the negative electrode plate includes graphite particles and hard carbon particles. D¹v₅₀ of the graphite particles is 7 µm to 14 µm. For example, D¹v₅₀ of the graphite particles is 7 µm, 8 µm, 9 µm, 10 µm, 12 µm, 13 µm, 14 µm, or a value falling within a range formed by any two thereof.

In some embodiments, D²v₅₀ of the hard carbon particles is 2 µm to 7 µm. For example, D²v₅₀ of the hard carbon particles is 2 µm, 3 µm, 4 µm, 5 µm, 6 µm, 7 µm, or a value falling within a range formed by any two thereof.

In some embodiments, the negative electrode plate includes graphite particles and hard carbon particles. D¹v₅₀ of the graphite particles and D²v₅₀ of the hard carbon particles satisfy: D²v₅₀/D¹v₅₀ < 0.8. For example, D¹v₅₀ of the graphite particles and D²v₅₀ of the hard carbon particles satisfy: D²v₅₀/D¹v₅₀ < 0.7, D²v₅₀/D¹v₅₀ < 0.6, D²v₅₀/D¹v₅₀ < 0.5, D²v₅₀/D¹v₅₀ < 0.4, D²v₅₀/D¹v₅₀ < 0.3, D²v₅₀/D¹v₅₀ < 0.2, or D²v₅₀/D¹v₅₀ < 0.1. In some embodiments, 0.1 ≤ D²v₅₀/D¹v₅₀ ≤ 0.7. When the volume average diameter of the graphite particles and the hard carbon particles as well as the ratio of the volume average diameter between the graphite and the hard carbon are controlled to fall within an appropriate range, the graphite particles and the hard carbon particles can be mixed more uniformly, and the particles can be arranged more compactly, thereby ensuring the negative electrode to provide sufficient lithium storage sites, exerting the synergy between the hard carbon and the graphite, and in turn, improving the energy density and high-temperature cycle performance of the negative electrode plate and the electrochemical device.

The volume average diameter D¹V₅₀ of the graphite particles and D²V₅₀ of the hard carbon particles bear the meanings known in the art, and may be measured by using an instrument and method known in the art. For example, the volume average diameter may be measured conveniently by using a laser particle size analyzer such as a Mastersizer 2000E laser particle size analyzer of Britain-based Malvern Instruments Ltd. with reference to the standard GB/T 19077-2016 *Particle Size Analysis-Laser Diffraction Methods.*

In some embodiments, in an X-ray diffraction pattern of the negative active material, a first diffraction peak and a second diffraction peak appear in a range of a diffraction angle 20 from 20° to 30°. A full-width-at-half-maximum of the first diffraction peak is 3° to 10°, and a full-width-at-half-maximum of the second diffraction peak is less than 1°. A peak intensity ratio between the second diffraction peak and the first diffraction peak, denoted as I_{B}/I_{A}, is greater than 100. In some embodiments, the peak intensity ratio between the second diffraction peak and the first diffraction peak, denoted as I_{B}/I_{A}, satisfies 100 < I_{B}/I_{A} < 100000. In this application, in an X-ray diffraction pattern of the negative active material, a first diffraction peak and a second diffraction peak appear in a range of a diffraction angle 20 from 20° to 30°. A full-width-at-half-maximum of the first diffraction peak is 3° to 10°, and a full-width-at-half-maximum of the second diffraction peak is less than 1°. Because hard carbon is primarily disordered carbon and graphite is primarily ordered graphitized carbon, the first diffraction peak is a diffraction peak corresponding to hard carbon, and the second diffraction peak is a diffraction peak corresponding to graphite. The ratio of the peak intensity I_{A} of the first diffraction peak to the peak intensity I_{B} of the second diffraction peak correlates with the mass percent of hard carbon and the mass percent of graphite. When the peak intensity I_{A} of the first diffraction peak and the peak intensity I_{B} of the second diffraction peak satisfy the above relation, it means that the mass percent of the hard carbon and the mass percent of the graphite satisfy the specified relation so that more synergy is exerted between the hard carbon and the graphite. The potential range of the negative electrode during charging and discharging depends on the potential range of graphite, and, by providing a particular number of lithium storage sites, the hydrogen in the hard carbon can absorb the heat derived from the charge-and-discharge reactions of the graphite, thereby reducing the temperature increment of the negative electrode during high-rate charging and discharging, and enhancing the high-temperature cycle performance of the electrochemical device.

The X-ray diffraction pattern of the negative active material and the corresponding full-width-at-half-maximum and peak intensity bear the meanings known in the art, and may be measured by an instrument and method known in the art. An exemplary measurement method includes: taking a powder specimen of the negative electrode material containing hard carbon blended with graphite; testing the specimen with an X-ray diffractometer (Bruker D8 Advance, Germany); scanning the specimen in a range of the diffraction angle 2θ falling within 10° to 60°; sorting out the obtained XRD curve, recording a broad peak (with the full-width-at-half-maximum being greater than 3°) in the 20 angle range of 20° to 30° as a first diffraction peak, and recording a sharp peak (with the full-width-at-half-maximum being less than 1°) in the 20 angle range of 20° to 30° as a second diffraction peak; and obtaining the peak intensity values of the first diffraction peak and the second diffraction peak.

In some embodiments, in a Raman spectrum of the negative active material layer, a first characteristic peak appears in a wavenumber range from 1320 cm⁻¹ to 1370 cm⁻¹, and a second characteristic peak appears in the wavenumber range from 1570 cm⁻¹ to 1620 cm⁻¹. The second characteristic peak comes from the disordered hard carbon, and the first characteristic peak comes from the ordered microcrystalline graphite region. Due to a high degree of disorder, the hard carbon exhibits a noticeable second characteristic peak. The intensity ratio between the first characteristic peak and the second characteristic peak is denoted as I_{D}/I_{G}, and the I_{D}/I_{G} ratio is less than 0.3. In some embodiments, 0.1 < I_{D}/I_{G} < 0.3. In this case, more synergy is exerted between the hard carbon and the graphite. By providing a particular number of lithium storage sites, the hydrogen in the hard carbon can absorb the heat derived from the charge-and-discharge reactions of the graphite, thereby reducing the temperature increment of the negative electrode during high-rate charging and discharging, and enhancing the high-temperature cycle performance of the electrochemical device.

The Raman spectrum and the characteristic peak intensity of the negative active material bear the meanings well known in the art, and may be measured by an instrument and method known in the art. An exemplary measurement method includes: sectioning the negative active material layer with an ion beam cross-section polisher to obtain a cross-section of the material, and then putting the cross-section on a Raman spectrum test bench; and bringing the instrument into focus to test the Raman spectrum of the negative active material layer.

In some embodiments, the mass ratio between the hard carbon and the graphite is (0.5 to 5): (100 to 95), and optionally (1 to 4.5): (100 to 95). When the mass ratio between the hard carbon and the graphite satisfies the above relation, more synergy is exerted between the hard carbon and the graphite. The potential range of the negative electrode during charging and discharging is provided solely by the graphite. At the same time, by providing a particular number of lithium storage sites, the hydrogen in the hard carbon can absorb the heat derived from the charge-and-discharge reactions of the graphite, thereby reducing the temperature increment of the negative electrode during high-rate charging and discharging, and enhancing the high-temperature cycle performance of the electrochemical device.

In some embodiments, based on a mass of the negative active material, a mass percent of the hard carbon is 0.5% to 5%. For example, the mass percent of the hard carbon is 1%, 1.5%, 2%, 2.5%, 3%, 3.5%, 4%, 4.5%, 5%, or a value falling within a range formed by any two thereof. Optionally, the mass percent of the hard carbon is 1% to 5%. When the mass percent of the hard carbon in the negative active material falls within an appropriate range, the hard carbon ensures a relatively high energy density and first-cycle Coulombic efficiency on the basis of improving the rate performance and high-temperature cycle performance of the electrochemical device.

In some embodiments, Dv₅₀ of the negative active material is 3 µm to 15 µm. For example, Dv₅₀ of the negative active material is 5 µm, 7 µm, 9 µm, 11 µm, 13 µm, 15 µm, or a value falling within a range formed by any two thereof.

In some embodiments, Dv₉₉ of the negative active material is 10 µm to 45 µm. For example, Dv₉₉ of the negative active material is 15 µm, 20 µm, 25 µm, 30 µm, 35 µm, 40 µm, 45 µm, or a value falling within a range formed by any two thereof.

In this application, Dv₅₀ and Dv₉₉ of the negative active material fall within an appropriate range, so that the particles of the negative active material can be mixed more uniformly, and the particles can be arranged more compactly, thereby increasing the energy density of the electrochemical device.

Dv₅₀ and Dv₉₉ of the negative active material bear the meanings known in the art, and may be measured by an instrument and method known in the art. For example, the volume average diameter may be measured conveniently by using a laser particle size analyzer such as a Mastersizer 2000E laser particle size analyzer of Britain-based Malvern Instruments Ltd. with reference to the standard GB/T 19077-2016 *Particle Size Analysis-Laser Diffraction Methods.*

In some embodiments, a gravimetric capacity of the negative active material of the battery charged from 0 V to 2.0 V is 300 mAh/g to 400 mAh/g. When the gravimetric capacity of the negative active material of the electrochemical device charged from 0 V to 2.0 V falls within the above range, the capacity retention rate of the electrochemical device is made to be relatively high.

The gravimetric capacity of the negative active material in this application is a first-cycle reversible gravimetric capacity, and bears the meaning known in the art and may be measured by an instrument and method known in the art. An exemplary measurement method includes: taking a negative electrode plate coated on a single side, and cutting the electrode plate into 14 mm-diameter discs; using the disc as a working electrode, using an 18 mm-diameter lithium sheet as a counter electrode, using 20 mm-diameter porous polyethylene film as a separator, injecting an electrolytic solution, and assembling all the parts to obtain a button battery. Discharging the button battery at three low currents of 0.05 C, 50 µA, and 20 µA in three different stages separately until the voltage reaches 0 V, and recording a first-cycle discharge capacity of the button battery; leaving the battery to stand for 10 minutes, and then charging the battery at a constant current of 0.1 C until a voltage of 2.0 V, and recording the first-cycle charge capacity of the button battery. Calculating the first-cycle reversible gravimetric capacity of the negative active material as: first-cycle reversible gravimetric capacity (mAh/g) = first-cycle charge capacity of the button battery/mass of the negative active material.

In some embodiments, the cohesion of the negative active material layer is 10 N/m to 100 N/m. The cohesion of the negative active material layer bears the meaning known in the art, and may be measured by an instrument and method known in the art. An exemplary method for measuring the cohesion with an Instron tensile tester (model: 33652) includes: Taking an electrode plate specimen that is 30 mm in width and 100 to 160 mm in length, and fixing the specimen onto a steel sheet by using a double-sided tape (model: 3M 9448A, 20 mm in width and 90 to 150 mm in length); sticking the double-sided tape to a surface of the negative active material layer, and connecting one end of the tape to a paper strip of a width equal to the tape width; adjusting a stop block of the tensile tester to an appropriate position, folding the paper strip upward, and sliding the paper strip for a distance of 40 mm at a speed of 50 mm/min; and measuring the cohesion between internal particles of the negative active material layer pulled at an angle of 180° (that is, pulled in an opposite direction).

In some embodiments, a bonding force between the negative current collector and the negative active material layer is 5 N/m to 30 N/m. The bonding force between the negative current collector and the negative active material layer bears the meaning known in the art, and may be measured by an instrument and method known in the art. An exemplary method for measuring the bonding force with an Instron tensile tester (model: 33652) includes: Taking an electrode plate specimen that is 30 mm in width and 100 to 160 mm in length, and fixing the specimen onto a steel sheet by using a double-sided tape (model: 3M 9448A, 20 mm in width and 90 to 150 mm in length); sticking the double-sided tape to a surface of the negative active material layer, and connecting one end of the tape to a paper strip of a width equal to the tape width; adjusting a stop block of the tensile tester to an appropriate position, folding the paper strip upward, and sliding the paper strip for a distance of 40 mm at a speed of 50 mm/min; and measuring the bonding strength between the negative active material layer and the negative current collector pulled at an angle of 180° (that is, pulled in an opposite direction).

In some embodiments, the negative active material layer does not exclude other negative active materials different from the combination of graphite and hard carbon. The specific type of other negative active materials is not particularly limited, and may be selected as required. As an example, other negative active materials include but are not limited to at least one of natural graphite, artificial graphite, mesocarbon microbead (MCMB), hard carbon, soft carbon, silicon, a silicon-carbon composite, SiO, a Li-Sn alloy, a Li-Sn-O alloy, Sn, SnO, SnO₂, spinel-structured Li₄Ti₅O₁₂, or a Li-Al alloy.

In some embodiments, the negative active material layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative active material layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative active material layer further optionally includes other agents, such as a thickener (for example, sodium carboxymethyl cellulose (CMC-Na)).

However, this application is not limited to such materials. The negative electrode plate in this application may contain other well-known materials suitable for use as a negative active material, a conductive agent, a binder, or a thickener.

In some embodiments, the negative current collector includes two surfaces opposite to each other in a thickness direction of the current collector. The negative active material layer is disposed on either or both of the two opposite surfaces of the negative current collector.

The negative current collector may be made of a metal foil or a porous metal sheet, for example, a foil or porous plate made of metal such as copper, nickel, titanium, or iron, or an alloy thereof. As an example, the negative current collector is a copper foil.

The negative electrode plate in this application may be prepared by a conventional method in this field. An exemplary preparation method includes: Dispersing the graphite and hard carbon to be included in the negative electrode plate in this application, optionally other negative active materials, a binder, and a thickener in a solvent such as N-methyl-pyrrolidone (NMP) or deionized water to form a homogeneous negative slurry; coating a negative current collector with the negative slurry, and performing steps such as drying and cold pressing to obtain a negative active material layer; and then laminating the surface of the negative active material layer with the lithium metal to obtain a negative electrode plate.

The negative electrode plate according to this application does not exclude other additional functional layers different from the negative active material layer. For example, in some embodiments, the negative electrode plate according to this application further includes a conductive undercoat layer (for example, formed of a conductive agent and a binder) disposed on a surface of the negative current collector and sandwiched between the negative current collector and the negative active material layer.

### Electrochemical device

A third aspect of this application provides an electrochemical device. The electrochemical device includes any device in which an electrochemical reaction occurs to implement conversion between chemical energy and electrical energy. Specific examples of the electrochemical device include but are not limited to a lithium-ion battery or a sodium-ion battery.

In any embodiment of this application, a K value of the electrochemical device is 0.01 mV/h to 2 mV/h. The K value of the electrochemical device is a metric for measuring the self-discharge rate of an electrochemical device, and is defined as a voltage drop within a specified period of time. The larger the K value, the greater the self-discharge rate of the electrochemical device. An exemplary test method is: taking a lithium-ion battery that has undergone chemical formation and capacity grading, charging the battery until 50% SOC, recording the potential at this time as OCV₁ (V); leaving the battery to stand for 48 hours, and then measuring the potential, denoted as OCV₂ (V); and calculating the K value as: K value = (OCV₁ - OCV₂)/48.

In some embodiments, the electrochemical device according to this application includes a positive electrode plate, a negative electrode plate, a separator, and an electrolytic solution.

In some embodiments, the positive electrode plate, the negative electrode plate, and the separator may be made into an electrode assembly by winding or stacking.

The electrochemical device according to this application further includes an outer package configured to package the electrode assembly and the electrolytic solution. In some embodiments, the outer package may be a hard shell such as a hard plastic shell, an aluminum shell, a steel shell, or the like; or, may be a soft package such as a pouch-type package. The soft package may be made of a material such as at least one of polypropylene (PP), polybutylene terephthalate (PBT), or polybutylene succinate (PBS).

### [Negative electrode plate]

The negative electrode plate used in the electrochemical device according to this application is the negative electrode plate according to the first aspect of this application.

### [Positive electrode plate]

The material, composition, and manufacturing method of the positive electrode plate used in the electrochemical device according to this application may include any technology known in the prior art.

The positive electrode plate includes a positive current collector and a positive active material layer disposed on at least one surface of the positive current collector and containing a positive active material. As an example, the positive current collector includes two surfaces opposite to each other in a thickness direction of the current collector. The positive active material layer is disposed on one or both of the two opposite surfaces of the positive current collector.

In some embodiments, the positive active material layer includes a positive active material. The specific type of the positive active material is not particularly limited, and may be selected as required. As an example, the positive active material may include one or more of lithium transition metal oxide, olivine-structured lithium-containing phosphate, or a modified compound thereof. In the electrochemical device according to this application, the modified compound of each positive active material described above may be formed by modifying the positive active material, for example, by doping, surface coating, or both doping and surface coating.

As an example, the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. As an example, the olivine-structured lithium-containing phosphate may include one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, or a modified compound thereof. Of such positive active materials, one may be used alone, or at least two may be used in combination.

In some embodiments, the positive active material layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive active material layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive current collector may be a metal foil or a composite current collector. As an example of the metal foil, the positive current collector may be an aluminum foil. The composite current collector may include a polymer material substrate and a metal material layer formed on at least one surface of the polymer material substrate. As an example, the metal material may be one or more selected from aluminum, aluminum alloy, nickel, nickel alloy, titanium, titanium alloy, silver, or silver alloy. As an example, the polymer material substrate may be selected from polypropylene, polyethylene terephthalate, polybutylene terephthalate, polystyrene, polyethylene, or the like.

The positive electrode plate in this application may be prepared by a conventional method in this field. For example, the positive active material layer is typically formed by coating a positive current collector with a positive slurry and then performing drying and cold calendering. The positive slurry is generally formed by dispersing a positive active material, an optional conductive agent, an optional binder, and any other ingredients into a solvent and then stirring well. The solvent may be, but without being limited to, N-methyl-pyrrolidone (NMP).

The positive electrode plate according to this application does not exclude other additional functional layers different from the positive active material layer. For example, in some embodiments, the positive electrode plate according to this application further includes a conductive undercoat layer (for example, formed of a conductive agent and a binder) disposed on a surface of the positive current collector and sandwiched between the positive current collector and the positive active material layer. In other embodiments, the positive electrode plate according to this application further includes a protection layer overlaying the surface of the positive active material layer.

### [Electrolytic solution]

The electrolytic solution serves to conduct active ions between the positive electrode plate and the negative electrode plate. The electrolytic solution for use in the electrochemical device of this application may be an electrolytic solution known in the prior art.

In some embodiments, the electrolytic solution includes an organic solvent, a lithium salt, and optionally a binder. The types of the organic solvent, the lithium salt, and the additive are not particularly limited, and may be selected according to actual needs.

In some embodiments, as an example, the lithium salt includes but is not limited to at least one of lithium hexafluorophosphate (LiPF₆), (lithium tetrafluoroborate (LiBF₄), lithium perchlorate (LiClO₄), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato) borate (LiBOB), lithium difluorophosphate (LiPO2F₂), lithium difluoro(bisoxalato) phosphate (LiDFOP), and lithium tetrafluoro(oxalato) phosphate (LiTFOP). Of the foregoing lithium salts, one may be used alone, or two or more may be used simultaneously.

In some embodiments, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE). Of the foregoing organic solvents, one may be used alone, or two or more may be used simultaneously. Optionally, two or more of the foregoing organic solvents are used simultaneously.

In some embodiments, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

As examples, such additives include, but are not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propene sultone (PST), sulfonate cyclic quaternary ammonium salt, succinic anhydride, succinonitrile (SN), adiponitrile (ADN), tris(trimethylsilane) phosphate (TMSP), or tris(trimethylsilane) borate (TMSB).

The electrolytic solution may be prepared by a conventional method in this field. For example, the electrolytic solution may be obtained by mixing well an organic solvent, a lithium salt, and an optional additive. The order of adding the ingredients is not particularly limited. For example, the lithium salt and the optional additive may be added together to the organic solvent and mixed well to obtain the electrolytic solution; or, the lithium salt may be added to the organic solvent, and then the optional additive is added into the organic solvent and mixed well to obtain the electrolytic solution.

### [Separator]

Disposed between the positive electrode plate and the negative electrode plate, the separator primarily serves to prevent a short circuit between the positive electrode plate and the negative electrode plate while allowing passage of active ions. The type of the separator is not particularly limited in this application, and may be any well-known porous separator that is highly stable both chemically and mechanically.

In some embodiments, the material of the separator may be one or more selected from, but without being limited to, glass fibers, non-woven fabric, polyethylene, polypropylene, or polyvinylidene fluoride. The separator may be a single-layer film or a multilayer composite film. When the separator is a multilayer composite film, materials of different layers may be identical or different. In some embodiments, the separator may be coated with a ceramic coating or a metal oxide coating.

### Electronic device

A fifth aspect of this application provides an electronic device. The electronic device includes the electrochemical device according to the fourth aspect of this application. The electrochemical device may be used as a power supply in the electronic device.

The electronic device is not particularly limited in this application, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

### Embodiments

The following embodiments are more detailed descriptions of the subject-matter disclosed herein. The embodiments are merely intended as illustrative descriptions because, evidently, a person skilled in the art may make various modifications and changes to such embodiments without departing from the disclosure hereof. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Embodiment 1

### Preparing hard carbon

Pre-oxidizing a coal-based pitch precursor with a softening point of 200 °C at a temperature of 180 °C for 2 hours in an air atmosphere, and then pre-calcining the precursor in a box furnace at 500 °C for 2 hours. Cooling down and pulverizing the precursor into powder, and grading the powder particles, and then calcining the powder in the box furnace for a second time at 700 °C for 2 hours to obtain hard carbon 1.

### Preparing a negative electrode plate

Mixing graphite with the hard carbon 1 at a mass ratio of 97: 3, and using the mixture as a negative active material. Mixing well the negative active material, styrene butadiene rubber (SBR), and sodium carboxymethyl cellulose (CMC) at a mass ratio of 97: 2: 1 in an appropriate amount of deionized water to form a homogeneous negative slurry, in which the solid content is 40 wt%. Coating a negative current collector (copper foil) with the slurry, drying the slurry at 85 °C, performing cold pressing, cutting, and slitting, and then drying the foil under an 120 °C vacuum condition for 12 hours to obtain a negative electrode plate.

### Preparing a positive electrode plate

Mixing well the lithium cobalt oxide (LiCoO₂) as a positive active material, Super P as a conductive agent, and polyvinylidene difluoride (PVDF) as a binder at a mass ratio of 97: 1.4: 1.6 in an appropriate amount of N-methylpyrrolidone (NMP) solvent to form a homogeneous positive slurry, in which the solid content is 72 wt%. Coating a positive current collector aluminum foil with the slurry, drying the slurry at 85 °C, performing cold pressing, cutting, and slitting, and then drying the foil under an 85 °C vacuum condition for 4 hours to obtain a positive electrode plate.

### Preparing an electrolytic solution

Mixing ethylene carbonate (EC), ethyl methyl carbonate (EMC), and diethyl carbonate (DEC) in a dry argon atmosphere glovebox at a mass ratio of EC: EMC: DEC = 30: 50: 20, adding 1.5 wt% 1,3-propane sultone and 2 wt% fluoroethylene carbonate, dissolving the added ingredients and stirring well, and then adding a lithium salt LiPF₆. Stirring well to obtain an electrolytic solution, in which the mass percent of LiPF₆ is 12.5%.

### Preparing a separator

Using a 7 µm-thick polyethylene (PE) porous polymer thin-film as a separator.

### Preparing a lithium-ion battery

Stacking the positive electrode plate, the separator, and the negative electrode plate sequentially, placing the separator between positive electrode and the negative electrode to serve a separation function, winding the stacked structure to obtain electrode assembly, welding tabs to the electrode assembly, putting the electrode assembly into an outer package aluminum-plastic film, and injecting the electrolytic solution into the package. Performing steps such as vacuum packaging, standing, chemical formation, shaping, and capacity grading to obtain a pouch-type lithium-ion battery.

### Embodiments 2 to 16 and Comparative Embodiments 1 to 3

The preparation method of the lithium-ion battery is similar to that in Embodiment 1, but differs in the hard carbon preparation process and relevant parameters of the negative active material, where:

The ω_{H}/ω_{C} ratio is adjusted by adjusting the second-time calcination temperature in the hard carbon preparation process. The higher the calcination temperature, the smaller the ωH/ωC ratio.

In Embodiments 10 to 12, during preparation of the hard carbon, the precursor is corn starch, the pre-oxidation is performed at 200 °C for 5 hours, and the second-time calcination temperature is 900 °C.

Relevant parameters and performance test results of Embodiments 1 to 16 and Comparative Embodiments 1 to 3 are shown in Table 1 to Table 3 below.

The preparation method in Embodiments 2 to 7 and Comparative Embodiments 1 and 2 in Table 1 is similar to that in Embodiment 1, but differs in that: the ω_{H/}ω_{C} ratio is adjusted by changing the temperature of the second-time calcination, the mass percent of hard carbon is 3%, D¹v₅₀ of graphite particles is 14, and D²v₅₀ of hard carbon particles is 4.

**Table 1**

| | ωh/ωc | I_{D}/I_{G} | I_{B}/I_{A} | VED percentage (percentage of VED relative to Comparative Embodiment 1) | Resistance of 0% SOC battery (mω) | Temperature increment of battery cycled at 5 C (°C) | Temperature increment of battery cycled at 10 C (°C) | Capacity retention rate of battery discharged at 10 C under 25 °C | Capacity retention rate of battery discharged at 3 C under 45 °C |
|---|---|---|---|---|---|---|---|---|---|
| Embodiment 1 | 0.20 | 0.21 | 5000 | 97.2% | 78 | 36 | 42 | 79% | 86% |
| Embodiment 2 | 0.15 | 0.19 | 4000 | 98% | 58 | 37 | 43 | 78% | 85% |
| Embodiment 3 | 0.12 | 0.18 | 3000 | 98.3% | 53 | 37 | 44 | 78% | 85% |
| Embodiment 4 | 0.09 | 0.17 | 3000 | 98.4% | 58 | 39 | 45 | 77% | 84% |
| Embodiment 5 | 0.08 | 0.17 | 2000 | 98.8% | 65 | 39 | 45 | 77% | 83% |
| Embodiment 6 | 0.05 | 0.16 | 2000 | 99.1% | 79 | 41 | 47 | 74% | 83% |
| Embodiment 7 | 0.02 | 0.16 | 2000 | 99.5% | 85 | 42 | 48 | 73% | 81% |
| Comparative Embodiment 1 | / | 0.12 | / | 100% | 115 | 43 | 49 | 72% | 80% |
| Comparative Embodiment 2 | 0.01 | 0.16 | 2000 | 99.6% | 99 | 43 | 49 | 72% | 80% |
| Comparative Embodiment 3 | 0.22 | 0.21 | 5000 | 96.5% | 96 | 36 | 42 | 79% | 86% |

The preparation method in Embodiments 8 to 12 in Table 2 is similar to that in Embodiment 3, but differs in that: the mass percent of hard carbon is changed in Embodiments 8 and 9, and the precursor material and the mass percent of the corresponding hard carbon are changed in Embodiments 10 to 12.

**Table 2**

| | ωh/ωc | Mass percent of hard carbon (ingredients of negative active material) | I_{D}/I_{G} | I_{B}/I_{A} | Gravimetric capacity (mAh/g) | Capacity retention rate of battery discharged at 10 C under 25 °C | Capacity retention rate of battery discharged at 3 C under 45 °C | Mass percent of hydrogen in negative electrode plate after 800 cycles |
|---|---|---|---|---|---|---|---|---|
| Embodiment 3 | 0.12 | 3% (hard carbon 1 + graphite) | 0.19 | 4000 | 352.5 | 78% | 85% | 1.62 |
| Embodiment 8 | 0.12 | 1% (hard carbon 1 + graphite) | 0.14 | 3000 | 357.8 | 78% | 84% | 1.33 |
| Embodiment 9 | 0.12 | 5% (hard carbon 1 + graphite) | 0.27 | 500 | 364 | 79% | 84% | 1.85 |
| Embodiment 10 | 0.10 | 1% (hard carbon 4 + graphite) | 0.13 | 20000 | 351.5 | 77% | 83% | 121 |
| Embodiment 11 | 0.10 | 3% (hard carbon 4 + graphite) | 0.18 | 3000 | 354 | 78% | 83% | 1.57 |
| Embodiment 12 | 0.10 | 5% (hard carbon 4 + graphite) | 0.26 | 400 | 359 | 78% | 82% | 1.90 |
| Comparative Embodiment 1 | Graphite | / | 0.12 | / | 350 | 72% | 80% | 1.01 |

The preparation method in Embodiments 13 to 16 in Table 3 is similar to that in Embodiment 3 except that: D¹v₅₀ of the graphite particles and D²v₅₀ of the hard carbon particles are changed, the mass percent of hard carbon is 3%, and the ω_{H}/ω_{C} ratio is 0.12.

**Table 3**

| | D¹v₅₀ (µm) | D²v₅₀ (µm) | D²v₅₀/D¹v₅₀ | Dv₅₀ (µm) | Dv₉₉(µm) | Capacity retention rate of battery discharged at 10 C under 25 °C | Capacity retention rate of battery discharged at 3 C under 45 °C |
|---|---|---|---|---|---|---|---|
| Embodiment 3 | 14 | 4 | 0.29 | 13.9 | 29 | 78% | 85% |
| Embodiment 13 | 14 | 6 | 0.47 | 14.1 | 30.2 | 76% | 83% |
| Embodiment 14 | 9 | 8 | 0.89 | 9.0 | 30.3 | 72% | 80% |
| Embodiment 15 | 12 | 4 | 0.33 | 12.1 | 25 | 76% | 84% |
| Embodiment 16 | 11 | 7 | 0.64 | 10.8 | 24.6 | 76% | 83% |

### Performance Test

### (1) Testing the discharge capacity retention rate of the lithium-ion battery

Charging a lithium-ion battery at a constant current of 10 C in a 25 °C environment until the voltage reaches 4.48 V, and then charging the battery at a constant voltage; and subsequently, discharging the battery at a constant current of 1 C until the voltage reaches 3 V, thereby completing a cycle. Recording the first-cycle discharge capacity. Performing 200 charge-and-discharge cycles, and recording the 200^{th}-cycle discharge capacity.Calculating the discharge capacity retention rate of the battery discharged at 10 C under 25 °C as: discharge capacity retention rate = (200th-cycle discharge capacity/first-cycle discharge capacity) × 100%.

Charging a lithium-ion battery at a constant current of 3 C in a 45 °C environment until the voltage reaches 4.48 V, and then charging the battery at a constant voltage; and subsequently, discharging the battery at a constant current of 1 C until the voltage reaches 3 V, thereby completing a cycle. Recording the first-cycle discharge capacity. Performing 600 charge-and-discharge cycles, and recording the 600^{th}-cycle discharge capacity.Calculating the discharge capacity retention rate of the battery discharged at 3 C under 45 °C as: discharge capacity retention rate = (600th-cycle discharge capacity/first-cycle discharge capacity) × 100%.

Testing 5 specimens for each embodiment or comparative embodiment, and averaging out the values.

### (2) Testing the rate performance and temperature increment of the lithium-ion battery

Charging a lithium-ion battery at a constant current rate of 5 C or 10 C under a constant temperature until the voltage reaches 4.48 V, and then charging the battery at a constant voltage until the current reaches 0.05 C, where the charger-discharger device is a Neware charger-discharger device. Affixing a thermocouple to a center point of a diagonal line of the lithium-ion battery, and wrapping the lithium-ion battery fully with insulation cotton. Measuring the actual temperatures of the lithium-ion battery at different charging rates, and calculating the temperature increment caused during the charging.

### (3) Measuring the internal resistance of a 0% SOC lithium-ion battery

Discharging a lithium-ion battery until the voltage reaches 3.0 V so that the battery enters a 0% state of charge (SOC), and measuring the direct-current resistance of the battery, that is, the internal resistance of the 0% SOC battery.

### (4) Determining the VED

Charging and discharging a lithium-ion battery at a rate of 0.2 C under 25 °C to obtain a 0.2 C discharge capacity and discharge energy. Dividing the discharge energy by the discharge capacity to obtain an average discharge voltage. Measuring the length, width, and height of the lithium-ion battery to obtain the volume of the battery. Calculating the volumetric energy density VED of the lithium-ion battery as: VED = discharge capacity × voltage/volume.

Testing the lithium-ion batteries in groups, each group containing 5 batteries. Averaging out the measured values.

Dividing the VED obtained in an embodiment by the VED obtained in Comparative Embodiment 1 to obtain a VED percentage.

### (5) Testing the mass percent of hydrogen in a negative electrode plate after 800 cycles

Discharging a lithium-ion battery until a voltage of 3.0 V after the battery has undergone 800 cycles. Disassembling the lithium-ion battery, taking out a negative electrode plate, washing the negative electrode plate with absolute ethanol, and drying the electrode plate. Scraping a negative active material layer off the negative current collector, and test the elements such as C, H, and O with a UNICUBE elemental analyzer to obtain a mass percent of hydrogen.

As can be seen from Table 1, in the graphite-based negative electrode blended with hard carbon, when a specified amount of hard carbon is added, the internal resistance of the lithium-ion battery is reduced, and the temperature increment of the battery cycled at a high rate is reduced sharply. The added hard carbon with a relatively high ω_{H}/ω_{C} ratio is more effective in reducing the temperature increment. Because the ω_{H}/ω_{C} ratio affects the temperature coefficient and affects the negative electrode in exerting the capacity at a low temperature, the ω_{H/}ω_{C} cannot be increased without limit. Preferably, for the purpose of reducing the temperature increment without impairing other performance indicators, the ω_{H}/ω_{C} ratio is preferably 0.05 to 0.15, and more preferably 0.08 to 0.12.

As can be seen from Table 2, with the increase of the mass percent of the hard carbon, the mass percent of hydrogen in the cycled negative electrode plate increases, thereby making the current distribution of the entire electrode plate more uniform, and effectively reducing the temperature increment caused during charging. The discharge capacity retention rate of the lithium-ion battery discharged at 10 C under 25 °C and discharged at 3 C under 45 °C is improved to some extent in contrast to the lithium-ion battery that employs the graphite alone, thereby effectively improving the rate performance and cycle performance of the lithium-ion battery. Further, it can be seen that the addition of the hard carbon can significantly improve the high-temperature cycle performance of the lithium-ion battery.

As can be seen from Table 3, by adjusting the particle diameters of the hard carbon particles and graphite particles, the uniformity of the hard carbon distribution can be adjusted and controlled, thereby improving the blending effect and further enhancing the rate performance and cycle performance of the lithium-ion battery.

What is described above is merely specific embodiments of this application, but is not intended to limit the protection scope of this application. Various equivalent modifications and replacements conceivable by any person skilled in the art without departing from the technical scope disclosed herein still fall within the protection scope of this application. Therefore, the protection scope of this application is subject to the protection scope of the claims.

## Claims

1. A negative electrode plate, comprising:
a negative current collector, and
a negative active material layer disposed on at least one side of the negative current collector; wherein the negative active material layer comprises a negative active material, the negative active material comprises graphite and hard carbon, and a ratio of a mass percent ω_{H} of hydrogen to a mass percent ω_{C} of carbon in the hard carbon is 0.02 ≤ ω_{H}/ω_{C} ≤ 0.2.

2. The negative electrode plate according to claim 1, wherein the ratio of the mass percent ω_{H} of hydrogen to the mass percent ω_{C} of carbon in the hard carbon is 0.08 ≤ ω_{H}/ω_{C} ≤ 0.15.

3. The negative electrode plate according to claim 1 or 2, wherein the negative electrode plate comprises graphite particles and hard carbon particles, and D¹v₅₀ of the graphite particles is 7 µm to 14 µm; and/or
D²v₅₀ of the hard carbon particles is 2 µm to 7 µm.

4. The negative electrode plate according to any one of claims 1 to 3, wherein the negative electrode plate comprises graphite particles and hard carbon particles, and D¹v₅₀ of the graphite particles and D²v₅₀ of the hard carbon particles satisfy: D²v₅₀/D¹v₅₀ < 0.8.

5. The negative electrode plate according to any one of claims 1 to 4, wherein the negative electrode plate comprises graphite particles and hard carbon particles, and D¹v₅₀ of the graphite particles and D²v₅₀ of the hard carbon particles satisfy: 0.1 ≤ D²v₅₀/D¹v₅₀ ≤ 0.7.

6. The negative electrode plate according to any one of claims 1 to 5, wherein the negative active material satisfies at least one of the following conditions:
(a) in an X-ray diffraction pattern of the negative active material, a first diffraction peak and a second diffraction peak appear in a range of a diffraction angle 20 from 20° to 30°, a full-width-at-half-maximum of the first diffraction peak is 3° to 10°, a full-width-at-half-maximum of the second diffraction peak is less than 1°, a peak intensity ratio between the second diffraction peak and the first diffraction peak is I_{B}/I_{A}, and the I_{B}/I_{A} ratio is greater than 100; or
(b) in a Raman spectrum of the negative active material layer, a first characteristic peak appears in a wavenumber range from 1320 cm⁻¹ to 1370 cm⁻¹, a second characteristic peak appears in the wavenumber range from 1570 cm⁻¹ to 1620 cm⁻¹, an intensity ratio between the first characteristic peak and the second characteristic peak is I_{D}/I_{G}, and the I_{D}/I_{G} ratio is less than 0.3.

7. The negative electrode plate according to claim 6, wherein the negative active material satisfies at least one of the following conditions:
(c) the peak intensity ratio between the second diffraction peak and the first diffraction peak is 100 < I_{B}/I_{A} < 100000; or
(d) the intensity ratio between the first characteristic peak and the second characteristic peak is 0.1 < I_{D}/I_{G} < 0.3.

8. The negative electrode plate according to any one of claims 1 to 7, wherein the negative active material satisfies at least one of the following conditions:
(1) Dv₅₀ of the negative active material is 3 µm to 15 µm;
(2) Dv₉₉ of the negative active material is 10 µm to 45 µm; or
(3) based on a mass of the negative active material, a mass percent of the hard carbon is 0.5% to 5%.

9. An electrochemical device, comprising the negative electrode plate according to any one of claims 1 to 8.

10. The electrochemical device according to claim 9, wherein, after the electrochemical device is charged and discharged at a current of 3 C under 25 °C for 800 cycles, a mass percent of hydrogen in the negative active material is less than 2%.

11. An electronic device, comprising the electrochemical device according to claim 9 or 10.
